# EUROPÄISCHE PATENTANMELDUNG

(11) **EP 3 384 745 A1**
(43) Veröffentlichungstag der Anmeldung: **10.10.2018**
(21) Anmeldenummer: 18160180.8
(22) Anmeldetag: 06.03.2018
(51) Int. Cl.: A01B 21/08, A01B 29/04

(54) **BODENBEARBEITUNGSVORRICHTUNG**

(30) Priorität: 04.04.2017 DE 202017101986 U
(71) Anmelder: Hendlmeier, Konrad, 93107 Untersanding (DE)
(72) Erfinder: Hendlmeier, Konrad, 93107 Untersanding (DE)
(74) Vertreter: Glück Kritzenberger Patentanwälte PartGmbB

(57) **Zusammenfassung**

Die Erfindung betrifft eine Bodenbearbeitungsvorrichtung (1) zum Zerkleinern von Ernterückständen oder der bestehenden Begrünung einer landwirtschaftlichen Nutzfläche umfassend zumindest einen Trägerrahmen (2) und zumindest eine drehbar um eine senkrecht zur Arbeitsrichtung (AR) der Bodenbearbeitungsvorrichtung (1) verlaufende erste Drehachse (DA1) an dem Trägerrahmen (2) gelagerte Schneidwalze (3), bei der die Schneidwalze (3) eine Vielzahl von einen Schneidabschnitt (4') umfassende Schneidmesserelemente (4) aufweist, wobei die Schneidmesserelemente (4) in mehreren senkrecht zur ersten Drehachse (DA1) verlaufenden und entlang der ersten Drehachse (DA1) annähernd gleichmäßig verteilten Ebenen (E1 bis E7) angeordnet sind und wobei die Schneidabschnitte (4') der Schneidmesserelemente (4) parallel zur ersten Drehachse (DA1) orientiert sind. Besonders vorteilhaft ist eine drehbar um eine senkrecht zur Arbeitsrichtung (AR) der Bodenbearbeitungsvorrichtung (1) verlaufende zweite Drehachse (DA2) an dem Trägerrahmen (2) gelagerte Radanordnung (7) oder Trommelwalzenanordnung (12) vorgesehen, die in Arbeitsrichtung (AR) der Schneidwalze (3) vorgeschaltet ist.

## Beschreibung

### Technisches Gebiet

Die Erfindung betrifft eine Bodenbearbeitungsvorrichtung gemäß dem Oberbegriff des Patentanspruches 1.

### Stand der Technik

Bodenbearbeitungsvorrichtungen umfassend einen Trägerrahmen und zumindest eine drehbar am Trägerrahmen gelagerte Schneidwalze, die zum Zerkleinern von Ernterückständen oder einer bestehenden Begrünung einer landwirtschaftlichen Nutzfläche ausgebildet ist, sind hinlänglich aus dem Stand der Technik bekannt.

Aus der DE 20 2014 104 667 U1 ist eine Schneidvorrichtung umfassend eine Schneidwalze bekannt. Die darin beschriebene Schneidwalze weist einen Walzenkörper auf, auf dessen Walzenkörperoberfläche die Schneidelemente direkt angeordnet sind, und zwar schräg zur Arbeitsrichtung der Schneidvorrichtung bzw. zur Drehachse der Schneidwalze. Nachteilig kann es bei einer derartigen Schneidvorrichtung aufgrund der direkten Anordnung der Schneidelemente auf der Walzenkörperoberfläche und des geringen Abstandes zwischen der Schneide der Schneidelemente und der Walzenkörperoberfläche zu einem Zusetzen der Schneidwalze mit Erntegut kommen. Auch können sich Klumpen zwischen den schräg zueinander verlaufenden Schneidelementen festsetzen und damit die Schneidwirkung beeinträchtigen.

Zur Ökologisierung in der Landwirtschaft werden durch die EU-Agrarkommission spezielle ökologischer Flächennutzungsprogramme gefördert, welche unter dem Schlagwort "Greening" bekannt sind. Das "Greening" umfasst den Erhalt von Dauergrünlandflächen wie Wiesen und Weiden, eine größere Vielfalt beim Anbau von Feldfrüchten sowie die Bereitstellung von sogenannten ökologischen Vorrangflächen auf Ackerland. Für das Dauergrünland gilt damit zukünftig ein umfassendes Umwandlungs- und Pflugverbot. Für das übrige Dauergrünland wird ein einzelbetriebliches Autorisierungssystem eingeführt. Danach ist eine Umwandlung von Dauergrünland in andere Nutzungen künftig im Wesentlichen nur noch möglich, wenn dafür an anderer Stelle neues Dauergrünland angelegt wird. Dadurch wird die Gesamtfläche des ökologisch wertvollen Dauergrünlandes stabilisiert. Zwischenfrüchte, Begrünungen, Winterkulturen und Winterzwischenfrüchte müssen im Rahmen des Greenings bis zum 15. Februar eines Jahres auf der Fläche belassen werden. Dadurch ergibt sich das Problem, dass die bestehende Begrünung, beispielsweise Kreuzblütler wie der Senf, vor der Neuansaat der landwirtschaftlichen Nutzfläche im Frühjahr effektiv zerkleinert werden müssen, was eine zuverlässige Schneidwirkung bezogen auf unterschiedlichste Zwischenfrüchte und Begrünungen der Bodenbearbeitungsvorrichtungen erfordert.

Mit diesem Problem befasst sich beispielsweise die DE 20 2015 101 330 U1, die eine Bodenbearbeitungsvorrichtung mit einer drehbar gelagerten Schneidwalze bereitstellt, bei der die Schneidwalze mit einer Vielzahl von Schneidmesserelementen ausgestattet ist, deren Schneidabschnitte parallel zur Drehachse der Schneidwalze verlaufen, wodurch eine effektivere Schneidwirkung erzielt werden kann. Jedoch ist es mit der beschriebenen Bodenbearbeitungsvorrichtung schwierig, die Pflanzenteile sehr kurz, das heißt auf kurze Längen zu schneiden und gleichzeitig ein störendes Zusetzen der Schneidmesserelemente zu verhindern.

Von der Fachwelt wird mittlerweile gefordert, dass sämtliche organischen Pflanzenteile im Zuge der oberhalb erwähnten Ökologisierung sowie auch bei der Beseitigung von Ernterückständen auf eine Länge von maximal 14 bis 15 cm zerteilt bzw. geschnitten werden sollen. Wissenschaftliche Studien belegen, dass beispielsweise Bodenwürmer zur Umsetzung des organischen Materials am Boden liegende kurze Teile brauchen. Außerdem wirkt das Schneiden der Pflanzenteile auf kurze Längen einer übermäßigen Vermehrung von Pflanzenschädlingen, wie zum Beispiel des mittlerweile sehr verbreiteten Maiszünslers, entgegen, da beispielsweise die Maiszünslerlarve nur in Maisstämmen mit einer Länge größer 15 cm überwintern kann. Das Schneiden von Zwischenfrüchten oder Ernteresten auf kurze Längen von maximal 15 cm ist daher erklärtes Ziel in Wissenschaft und Fachkreisen.

### Darstellung der Erfindung

Ausgehend von dem voranstehend genannten Stand der Technik liegt der Erfindung die Aufgabe zugrunde, eine Bodenbearbeitungsvorrichtung aufzuzeigen, welche eine zuverlässige Schneid- und Zerkleinerungswirkung unabhängig von der Beschaffenheit der Zwischenfrüchte und Begrünungen aufweist und zugleich ermöglicht, Pflanzenteile effektiv auf definierte kurze Längen zu schneiden. Die Aufgabe wird durch eine Bodenbearbeitungsvorrichtung gemäß dem Patentanspruch 1 gelöst.

Die Erfindung stellt eine Bodenbearbeitungsvorrichtung zum Zerkleinern von Ernterückständen oder der bestehenden Begrünung einer landwirtschaftlichen Nutzfläche umfassend zumindest einen Trägerrahmen und zumindest eine drehbar um eine senkrecht zur Arbeitsrichtung der Bodenbearbeitungsvorrichtung verlaufende erste Drehachse an dem Trägerrahmen gelagerte Schneidwalze zur Verfügung bei der die Schneidwalze eine Vielzahl von einen Schneidabschnitt umfassende Schneidmesserelemente aufweist, wobei die Schneidmesserelemente in mehreren senkrecht zur ersten Drehachse verlaufenden und entlang der ersten Drehachse annähernd gleichmäßig verteilten Ebenen angeordnet sind und wobei die Schneidabschnitte der Schneidmesserelemente parallel zur ersten Drehachse orientiert sind. Der wesentliche Aspekt der erfindungsgemäßen Bodenbearbeitungsvorrichtung ist darin zu sehen, dass eine drehbar um eine senkrecht zur Arbeitsrichtung der Bodenbearbeitungsvorrichtung verlaufende zweite Drehachse an dem Trägerrahmen gelagerte Radanordnung oder Trommelwalzenanordnung vorgesehen ist, die in Arbeitsrichtung der Schneidwalze vorgeschaltet ist.

Besonders vorteilhaft kann über die in Arbeitsrichtung vor der Schneidwalze angeordnete Radanordnung oder Trommelwalzenanordnung sowohl eine Tiefenbegrenzung für die Schneidwalze als auch ein Niederhalten der Pflanzen oder Pflanzenteile erzielt werden, wodurch letztlich das Schneiden der Pflanzenteile auf kurze Längen verbessert wird.

Um kurze Längen der Pflanzenstängel zu gewährleisten sollen die Schneidabschnitte der Schneidmesserelemente bis zu einem gewissen Grad in den Boden eindringen. Aus diesem Grund ist die Schneidwalze derart auf bzw. über dem Boden zu führen, dass dieses Eingreifen bzw. Eindringen in den Boden möglich ist. Durch die erfindungsgemäße Radanordnung oder Trommelwalzenanordnung kann die Schneidwalze besonders vorteilhaft in einer gewünschten, präzise vorgegebenen Arbeitshöhe auf bzw. über dem Boden geführt werden. Dadurch wird verhindert, dass die Schneidwalze aufgrund ihres Eigengewichts tiefer als zum Durchtrennen des pflanzlichen Materials notwendig in das Erdreich eindringt. Insbesondere bei weichen Böden und den naturgemäßen Unebenheiten des Bodens wirkt sich dies positiv aus. Resultierend daraus kann besonders vorteilhaft einerseits der Energieverbrauch bei der Bodenbearbeitung optimiert werden und andererseits die Gefahr eines Zusetzens der Schneidmesserelemente durch Erde und damit einhergehende Messerbeschädigungen minimiert werden.

Weiterhin vorteilhaft weist die erfindungsgemäße Radanordnung oder Trommelwalzenanordnung eine niederhaltende und/oder auch orientierende Wirkung für die Pflanzen bzw. Pflanzenteile auf. Insbesondere vorteilhaft wird dadurch bewirkt, dass das Pflanzenmaterial auf dem Boden niedergedrückt bzw. niedergehalten und zumindest zu einem gewissen Grad so ausgerichtet wird, dass es der Länge nach in Arbeitsrichtung der Bodenbearbeitungsvorrichtung auf dem Boden zu liegen kommt. Dadurch können die Schneidabschnitte der Schneidmesserelemente die Pflanzenstängel in optimaler Ausrichtung, bevorzugt näherungsweise senkrecht zu den Pflanzenstängeln schneiden und so gleichmäßig kurze Stücke erzeugen.

Bevorzugt verlaufen die erste und zweite Drehachse parallel zueinander und sind jeweils in einer vom Boden beabstandeten Horizontalebene aufgenommen und die Radanordnung oder Trommelwalzenanordnung ist höheneinstellbar ausgebildet, wobei der Abstand der die zweite Drehachse aufnehmenden Horizontalebene vom Boden innerhalb eines vorgegebenen Höhenbereichs variabel einstellbar ist. Über die Höheneinstellbarkeit der Radanordnung oder Trommelwalzenanordnung kann vorteilhaft eine Arbeitshöhe der Schneidwalze vorgegeben werden, da über die Auflage der Radanordnung oder Trommelwalzenanordnung die Schneidwalze unterstützt wird und somit auch die Auflage der Schneidwalze auf dem Boden und damit eine definierte Arbeitstiefe der Schneidwalze, nämlich die Eindringtiefe der Schneidabschnitte der Schneidmesserelemente in den Boden eingestellt werden kann.

Insbesondere bevorzugt weist die Radanordnung eine Vielzahl von Rädern auf, wobei die Räder beabstandet zueinander über eine Arbeitsbreite der Schneidwalze entlang der zweiten Drehachse angeordnet sind, und zwar derart, dass zwischen jeweils zwei benachbarten Rädern ein Radabstand entsteht. Die Räder können dabei beispielsweise jeweils einzeln oder bevorzugt auf einer gemeinsamen Radachse gelagert sein. Eine Lauffläche der Räder kann flach oder gerundet ausgebildet sein und/oder eine Profilierung aufweisen, wodurch eine Traktionserhöhung erreicht wird.

Die Radanordnung weist einen äußeren Rotationsdurchmesser auf, wobei der äußere Rotationsdurchmesser in vertikaler Projektion einen Auflagebereich der Radanordnung in einer sich quer zur zweiten Drehachse erstreckenden Richtung begrenzt. Der äußere Rotationsdurchmesser wird dabei in einer horizontalen Ausrichtung in der Horizontalebene bestimmt und in vertikaler Projektion auf die Bodenfläche projiziert. Diese Projektion begrenzt in einer Richtung senkrecht zur Drehachse der Radanordnung den Auflagebereich. Der Auflagebereich stellt damit einen Unterstützungs- oder Stützbereich der Bodenbearbeitungsvorrichtung dar, in dem die Bodenbearbeitungsvorrichtung auf dem Boden aufliegt und damit die Schneidwalze entlastet, derart dass die Schneidwalze zumindest teilweise von der Radanordnung getragen wird und im Auflagebereich gegen den Boden abgestützt wird.

Gemäß einer alternativen, ebenso bevorzugten Ausführungsvariante weist die Trommelwalzenanordnung wenigstens einen rohrförmigen Trommelwalzenkörper auf, wobei der Trommelwalzenkörper besonders bevorzugt Schneidkantenelemente mit jeweils einer Schneide umfasst. Die Schneiden der Schneidkantenelemente sind dabei derart angeordnet, dass sie in einer parallel zur Arbeitsrichtung verlaufenden Schnittrichtung schneiden. Die Schneidkantenelemente sind beispielsweise in Form von umlaufenden Stegmessern ausgebildet und sind konzentrisch um die zweite Drehachse herum angeordnet, wobei die Schneiden eine Zylindermantelfläche des im Wesentlichen zylinderförmigen Trommelwalzenkörpers umlaufen. Alternativ ist auch denkbar, dass jedes Schneidkantenelement durch mehrere in Umfangsrichtung der Zylindermantelfläche hintereinander angeordnete Schneidkantenelementabschnitte gebildet ist, wobei die Schneidkantenelementabschnitte beispielsweise so um die Drehachse herum am Trommelwalzenkörper angeordnet sind, dass sie in einer gemeinsamen, senkrecht zur Drehachse verlaufenden Ebene aufgenommen sind.

Die Trommelwalzenanordnung weist ebenfalls einen Auflagebereich auf, der einen Unterstützungs- oder Stützbereich der Bodenbearbeitungsvorrichtung darstellt, in dem die Bodenbearbeitungsvorrichtung auf dem Boden aufliegt und damit die Schneidwalze entlastet, derart dass die Schneidwalze zumindest teilweise von der Trommelwalzenanordnung getragen wird und im Auflagebereich gegen den Boden abgestützt wird.

Der Trägerrahmen weist zumindest einen sich parallel zu den Drehachsen über die Arbeitsbreite der Schneidwalze erstreckenden Querträgerrahmenabschnitt auf, der unterhalb der die erste Drehachse aufnehmenden Horizontalebene angeordnet ist und in Arbeitsrichtung der Radanordnung oder Trommelwalzenanordnung vorgeschaltet ist. Am Querträgerrahmenabschnitt des Trägerrahmens sind vorzugsweise zinkenartige Flachstahlelemente in vorgegebenem Abstand zueinander angeordnet, wobei sich die zinkenartigen Flachstahlelemente ausgehend vom Querträgerrahmenabschnitt entgegen der Arbeitsrichtung in Richtung der nachfolgenden Radanordnung oder Trommelwalzenanordnung schräg nach unten erstrecken und mit ihren freiendseitigen Endabschnitten einen sich quer zur Arbeitsrichtung erstreckenden Eingriffsbereich zum Eingreifen in den Boden definieren. Bevorzugt überlappt der Eingriffsbereich der zinkenartigen Flachstahlelemente mit dem Auflagebereich der Radanordnung, wobei sich die zinkenartigen Flachstahlelemente mit ihren freiendseitigen Endabschnitten in den Radabstand zwischen zwei benachbarten Rädern erstrecken und/oder in den äußeren Rotationsdurchmesser der Radanordnung eingreifen.

Da die organischen Pflanzenteile wie Stängel und Halme nicht immer in Arbeitsrichtung liegen, sondern in nicht unerheblichem Maße auch quer zur Arbeitsrichtung, können diese Pflanzenteile nicht immer einwandfrei von den quer zur Arbeitsrichtung verlaufenden Schneidabschnitten der Schneidmesserelemente der Schneidwalze erfasst werden. Vorteilhaft ermöglichen die zinkenartigen Flachstahlelemente neben einer Auflockerung bzw. neben einem gezielten Aufwühlen des Erdreiches auch ein Schneiden der quer zur Arbeitsrichtung liegenden Pflanzenteile. In solchen Fällen, in denen die Pflanzenteile durch die zinkenartigen Flachstahlelemente angeknickt und nach oben geknickt werden, wirkt die Radanordnung vorteilhaft als Niederhalter der zu schneidenden Pflanzenteile, so dass diese entweder noch durch die zinkenartigen Flachstahlelemente selbst oder aber nachfolgend mittels der Schneidwalze effektiv geschnitten werden. Ein ganz besonderer Vorteil ergibt sich dadurch, dass der Eingriffsbereich der zinkenartigen Flachstahlelemente mit dem Auflagebereich der Radanordnung überlappt, da darüber die Pflanzenteile innerhalb eines Bereiches, nämlich des Überlappungsbereiches von der Radanordnung gehalten und in dieser gehaltenen Stellung mit den zinkenartigen Flachstahlelementen geschnitten werden können. Ein Kurzschneiden der Pflanzen auf eine Länge von maximal 15 cm ist damit effektiv möglich. Ganz besonders bevorzugt liegt der Eingriffsbereich der zinkenartigen Flachstahlelemente innerhalb des Auflagebereiches der Radanordnung, beispielsweise in einer die Drehachse der Radanordnung aufnehmenden und senkrecht zur Horizontalebene verlaufenden Vertikalebene.

Die Schneidmesserelemente sind besonders vorteilhaft radial beabstandet zur Drehachse angeordnet, und zwar derart, dass der Abstand der Schneidabschnitte der Schneidmesserelemente zur Drehachse gleich oder annähernd gleich ist und die Schneidabschnitte den äußeren Rotationsdurchmesser der Schneidwalze festlegen.

Die in einer Ebene angeordneten Schneidmesserelemente sind in einer bevorzugten Ausführungsvariante gleichmäßig um die Drehachse verteilt angeordnet, und zwar derart, dass zwei benachbarte Schneidmesserelemente näherungsweise denselben Abstand zueinander aufweisen. Die Schneidwalze weist ferner einen Walzenkörper mit mehreren speichenartig davon nach außen abstehenden Halteelementen auf, wobei jeweils ein Halteelement zur freiendseitigen Aufnahme zumindest eines Schneidmesserelementes ausgebildet ist. Die Schneidmesserelemente sind damit beabstandet zum Walzenkörper am freiendseitigen Ende eines Halteelement angeordnet. Hierdurch wird ein Festsetzen der gebildeten Freiräume effektiv vermieden. Vorteilhaft ist der Walzenkörper durch ein Nabenrohr gebildet, um eine entsprechende Druckbelastung auf die Schneidmesserelemente sowie die umgeknickte Grünpflanzen bzw. Pflanzenreste bereitstellen zu können.

Ein Schneidmesserelement ist jeweils lösbar mit dem Halteelement verbunden, vorzugsweise mittels einer kraft- und/oder formschlüssigen Verbindung. Hierdurch ist ein erleichterter Austausch möglich.

Vorteilhaft bilden die in einer Ebene angeordneten Schneidmesserelemente eine im Querschnitt sternförmige Schneidmesseranordnung aus, wobei die Schneidmesserelemente zumindest zweier entlang der Drehachse aufeinander folgender Schneidmesseranordnungen auf Lücke zueinander angeordnet sind und/oder deren Schneidabschnitte entlang der Drehachse zumindest abschnittsweise überlappen.

Auch können die im Querschnitt sternförmigen Schneidmesseranordnungen beabstandet zueinander entlang der Drehachse angeordnet sein, und zwar derart, dass zwischen den aufeinander folgender Schneidelementen zweier benachbarten Schneidmesseranordnungen ein Freiraum entsteht. Bei dieser Ausführungsvariante können am Querträgerabschnitt des Trägerrahmens noch zusätzliche zinkenartige Flachstahlelemente angeordnet sein, die sich entgegen der Arbeitsrichtung in Richtung der nachfolgenden Schneidwalze erstrecken und sich ausgehend vom Querträgerrahmenabschnitt des Trägerrahmens schräg nach unten in den Freiraum zwischen zwei Schneidmesseranordnungen erstrecken und/oder in den äußeren Rotationsdurchmesser der Schneidwalze eingreifen.

Weiterhin vorteilhaft können die Schneidabschnitte der Schneidelemente der Schneidmesseranordnungen auf einer parallel zur Drehachse verlaufenden Geraden angeordnet sind, und zwar durch die Freiräume beabstandet zueinander.

Vorteilhaft weist eine Schneidmesseranordnung mehrere, vorzugsweise 8 bis 24 Schneidmesserelemente in einer Ebene aufweist.

Die Schneidwalze weist beispielsweise einen äußeren Rotationsdurchmesser zwischen 500mm und 800mm, vorzugsweise zwischen 550mm und 650mm auf, wobei der Durchmesser des Walzenkörpers zwischen 250mm und 500mm und die Breite des Schneidabschnittes eines Schneidelementes zwischen 200mm und 400mm beträgt.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

### Kurze Beschreibung der Zeichnungen

Die Erfindung soll nachfolgend anhand von Ausführungsbeispielen im Zusammenhang mit den Zeichnungen näher erläutert werden. Es zeigen
Fig. 1 eine schematische Draufsicht auf eine Ausführungsvariante der erfindungsgemäßen Bodenbearbeitungsvorrichtung,
Fig. 2 eine schematische Schnittdarstellung entlang der Schnittlinie A-A der Bodenbearbeitungsvorrichtung gemäß Figur 1,
Fig. 3 eine schematische Draufsicht auf eine alternative Ausführungsvariante der erfindungsgemäßen Bodenbearbeitungsvorrichtung,
Fig. 4 eine schematische Schnittdarstellung entlang der Schnittlinie A*-A* der Bodenbearbeitungsvorrichtung gemäß Figur 3,
Fig. 5 eine schematische Draufsicht auf eine weitere alternative Ausführungsvariante der erfindungsgemäßen Bodenbearbeitungsvorrichtung und
Fig. 6 eine schematische Draufsicht auf eine noch weitere alternative Ausführungsvariante der erfindungsgemäßen Bodenbearbeitungsvorrichtung.

### Wege zur Ausführung der Erfindung

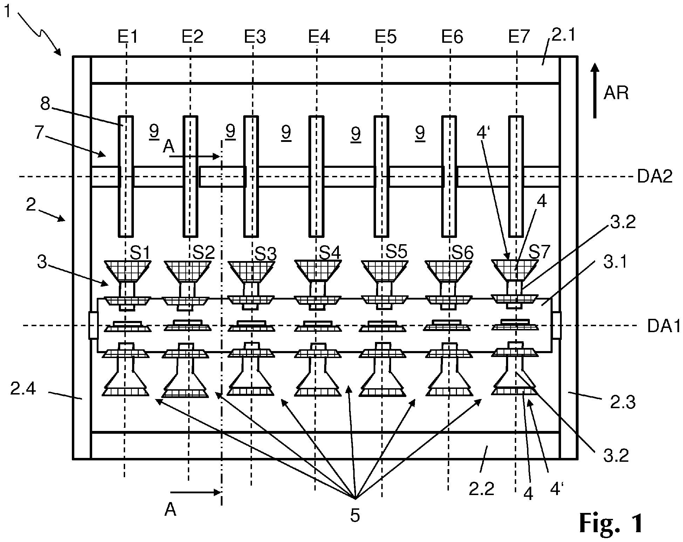

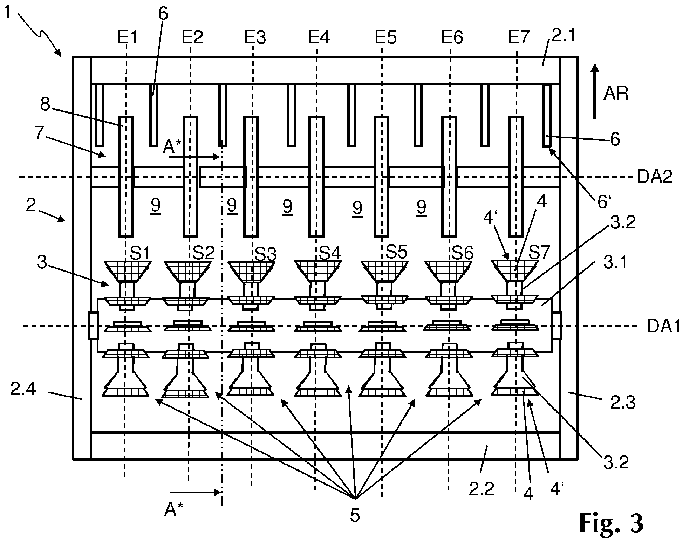

Figuren 1 und 3 zeigen beispielhaft jeweils eine schematische Draufsicht auf zwei Ausführungsvarianten einer erfindungsgemäßen Bodenbearbeitungsvorrichtung 1.

Die erfindungsgemäße Bodenbearbeitungsvorrichtung 1 ist für eine Arbeitsrichtung AR ausgelegt, welche im Wesentlichen der Fahrrichtung einer Zugmaschine entspricht, an der die Bodenbearbeitungsvorrichtung 1 montiert ist. Alternativ ist es auch möglich die Bodenbearbeitungsvorrichtung 1 mit einem weiteren Bodenbearbeitungsgerät, wie zum Beispiel einem Grubber oder einer Egge zu kombinieren, und zwar derart, dass die Arbeitsrichtung AR der Bodenbearbeitungsvorrichtung 1 einer Arbeitsrichtung des weiteren Bodenbearbeitungsgerätes entspricht.

Die Bodenbearbeitungsvorrichtung 1 ist vorzugsweise zum Zerkleinern von Ernterückständen und/oder der bestehenden Begrünung einer landwirtschaftlichen Nutzfläche ausgebildet und umfasst zumindest einen ein- oder mehrteiligen Trägerrahmen 2 und zumindest eine drehbar um eine senkrecht zur Arbeitsrichtung AR der Bodenbearbeitungsvorrichtung 1 verlaufende erste Drehachse DA1 an dem Trägerrahmen 2 gelagerte Schneidwalze 3, wobei die Schneidwalze 3 eine Vielzahl von einen Schneidabschnitt 4' umfassende Schneidmesserelemente 4 aufweist. Die erste Drehachse DA1 verläuft hierbei senkrecht zur Arbeitsrichtung AR der Bodenbearbeitungsvorrichtung 1.

Die Schneidwalze 3 weist einen Walzenkörper 3.1 mit mehreren speichenartig davon nach außen abstehenden Halteelementen 3.2 auf, wobei jeweils ein Halteelement 3.2 zur freiendseitigen Aufnahme zumindest eines Schneidmesserelementes 4 ausgebildet ist. Der Walzenkörper 3.1 kann beispielsweise durch ein Nabenrohr gebildet sein, welches ebenfalls aus Metall, vorzugsweise Stahl hergestellt ist. Die Schneidwalze 3 weist beispielsweise einen Rotationsdurchmesser zwischen 500mm und 800mm, vorzugsweise zwischen 550mm und 650mm auf. Der Durchmesser des Walzenkörpers 3.1 beträgt beispielsweise zwischen 50mm und 500mm.

Die Schneidmesserelemente 4 sind so genannte Verschleißteile und daher lösbar mit dem jeweiligen Halteelement 3.2 verbunden, vorzugsweise mittels einer formschlüssigen und/oder kraftschlüssigen Verbindung. In einer bevorzugten Ausführungsvariante sind die Schneidmesserelemente 4 über eine Schraubverbindung am freien Ende der Halteelemente 3.2 befestigt.

Ein Schneidmesserelement 4 ist vorzugsweise aus einem flachen Metall hergestellt, und zwar beispielsweise aus Stahl oder Bandstahl. Das Schneidmesserelement 4 kann prinzipiell unterschiedliche Querschnittformen aufweisen. Beispielsweise kann das Schneidmesserelement 4 einen trapezförmigen Querschnitt aufweisen, wobei die längere Längsseite des Trapezes den Schneidabschnitt 4' bildet. Der Schneidabschnitt 4' ist vorzugsweise gerade ausgebildet und verjüngt sich zum freien Ende hin. Dem Schneidabschnitt 4' gegenüberliegend ist ein Verbindungsabschnitt 4" vorgesehen, mit dem das Schneidmesserelement 4 zumindest am Haltelement 3.2 anliegt, und zwar vorzugsweise flächig. Die Breite des Schneidabschnittes 4' eines Schneidelementes 4 beträgt beispielsweise zwischen 100mm und 600mm, vorzugsweise zwischen 200mm und 500mm.

Die Schneidmesserelemente 4 sind in mehreren senkrecht zur ersten Drehachse DA1 verlaufenden und entlang der ersten Drehachse DA1 annähernd gleichmäßig verteilten Ebenen E1 bis E7 angeordnet, und zwar derart, dass die Schneidabschnitte 4' der Schneidmesserelemente 4 parallel zur ersten Drehachse DA1 orientiert sind. Die Schneidabschnitte 4' mehrerer entlang der Drehachse DA1 aufeinander folgender Schneidmesserelemente 4 verlaufen somit entlang einer virtuellen Geraden, welche parallel zur Drehachse DA1 orientiert ist. Die in jeweils einer Ebene E1 bis E7 angeordneten Schneidmesserelemente 4 bilden eine im Querschnitt sternförmige Schneidmesseranordnung S1 bis S7 aus, wobei die Schneidmesserelemente 4 zumindest zweier entlang der Drehachse DA aufeinander folgender Schneidmesseranordnungen S1 bis S7 auf Lücke zueinander angeordnet sind und/oder deren Schneidabschnitte 4' entlang der Drehachse DA zumindest abschnittsweise überlappen.

Der Trägerrahmen 2, der in den Figuren beispielhaft angedeutet ist, kann über geeignete Kupplungsvorrichtungen direkt mit einer Zugmaschine, beispielsweise einem Traktor, verbunden sein. Alternativ ist eine Kombination bzw. Verbindung mit einem weiteren Bodenbearbeitungsgerät wie zum Beispiel einer Egge oder einem Grubber möglich. Ferner weist der Trägerrahmen 2 beispielsweise zumindest zwei gegenüberliegende Querträgerrahmenabschnitte 2.1, 2.2 auf, welche parallel zur ersten Drehachse DA1 der Schneidwalze 3 und quer zur Arbeitsrichtung AR verlaufen. Die freien Enden der zwei gegenüberliegenden Querträgerrahmenabschnitte 2.1, 2.2 sind jeweils über Längsträgerrahmenabschnitte 2.3, 2.4 miteinander verbunden, welche beispielsweise parallel zueinander in Arbeitsrichtung AR orientiert sind. Beispielsweise entsteht hierdurch eine in Draufsicht rechteckförmige Rahmenstruktur, wobei die gegenüberliegenden Längsträgerrahmenabschnitt 2.3, 2.4, die gegenüberliegenden freien Enden der Schneidwalze 3 aufnehmen. Der Trägerrahmen 2 ist vorzugsweise aus Metall, insbesondere Stahl hergestellt, wobei die Querträgerrahmenabschnitte 2.1, 2.2 durch rohrartige Metallträgerelemente und die Längsträgerrahmenabschnitt 2.3, 2.4 durch plattenartige Metallträgerelemente gebildet sind, welche miteinander fest verbunden, vorzugsweise miteinander verschweißt sind.

Die Bodenbearbeitungsvorrichtung 1 umfasst ferner zumindest eine in Arbeitsrichtung AR der Schneidwalze 3 vorgeschaltete und drehbar um eine senkrecht zur Arbeitsrichtung AR der Bodenbearbeitungsvorrichtung 1 verlaufende zweite Drehachse DA2 an dem Trägerrahmen 2 gelagerte Radanordnung 7. Die zweite Drehachse DA2 der Radanordnung 7 verläuft damit parallel zur ersten Drehachse DA1 der Schneidwalze 3. Die Radanordnung 7 umfasst eine Vielzahl von Rädern 8, die über die Arbeitsbreite der Schneidwalze 3 entlang der zweiten Drehachse DA2 beabstandet zueinander angeordnet sind, und zwar derart, dass zwischen zwei benachbarten Rädern 8 jeweils ein Radabstand 9 entsteht. In den dargestellten Beispielen der Figuren 1 und 3 sind die Räder 8 auf einer gemeinsamen Radachse gelagert. Alternativ wäre es jedoch auch möglich, die Räder 8 einzeln zu lagern.

Die Räder 8 der Radanordnung 7 sind derart entlang der zweiten Drehachse DA2 verteilt angeordnet, dass jedes Rad 8 in Arbeitsrichtung AR fluchtend zu einer der Schneidmesseranordnungen S1 bis S7 der Schneidwalze 3 ausgerichtet ist. Dadurch ist beispielsweise in jeder Ebene E1 bis E7 sowohl ein Rad 8 als auch eine Schneidmesseranordnung S1 bis S7 angeordnet.

In der Ausführungsvariante gemäß der Figur 3 sind unterschiedlich zu der Ausführungsvariante gemäß Figur 1 am Querträgerrahmenabschnitt 2.1 des Trägerrahmens 2 zinkenartige Flachstahlelemente 6 angeordnet, die sich entgegen der Arbeitsrichtung AR in Richtung der nachfolgenden Radanordnung 7 ausgehend vom Querträgerrahmenabschnitt 2.1 des Trägerrahmens 2 schräg nach unten erstrecken. Jedes zinkenartige Flachstahlelement 6 erstreckt sich dabei in jeweils einen Radabstand 9 zwischen zwei benachbarten Rädern 8. Damit greifen die zinkenartige Flachstahlelemente 6 mit ihren freiendseitigen Endabschnitten 6' zwischen die Räder 8 der Radanordnung 7 ein. Der Querträgerrahmenabschnitt 2.1 des Trägerrahmens 2 erstreckt sich parallel zu den Drehachsen DA1, DA2 über die Arbeitsbreite der Schneidwalze 3.

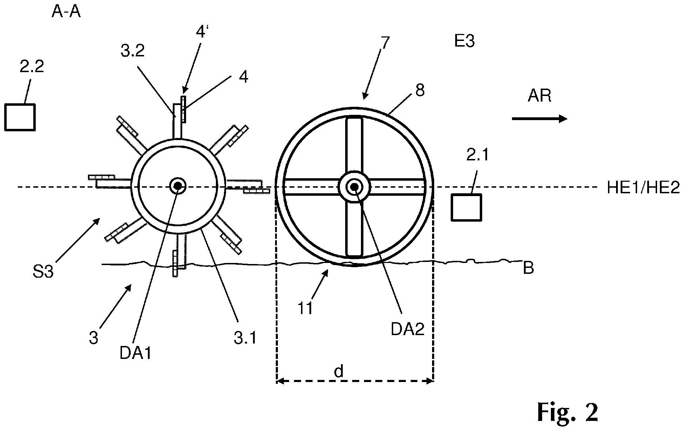

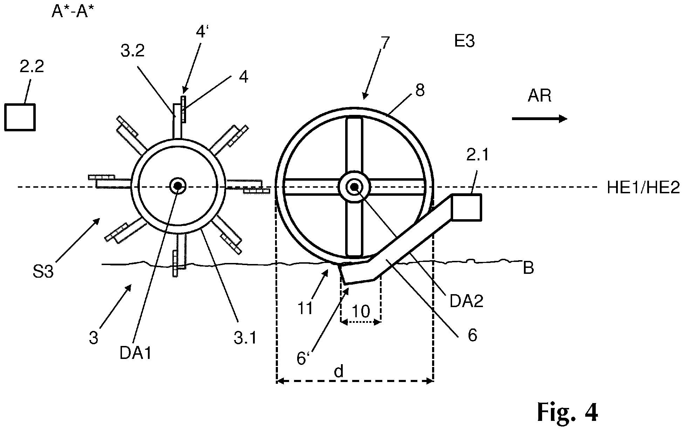

Wie insbesondere aus den Figuren 2 und 4 ersichtlich, ist der Querträgerrahmenabschnitt 2.1 des Trägerrahmens 2 unterhalb einer die erste Drehachse DA1 der Schneidwalze 3 aufnehmenden Horizontalebene HE1 angeordnet. In den dargestellten Beispielen gemäß Figuren 2 und 4 fällt eine die zweite Drehachse DA2 der Radanordnung 7 aufnehmenden Horizontalebene HE2 mit der Horizontalebene HE1 zusammen. Die Radanordnung 7 ist jedoch höhenverstellbar ausgebildet, und zwar derart, dass der Abstand der die zweite Drehachse DA2 aufnehmenden Horizontalebene HE2 vom Boden B innerhalb eines vorgegebenen Höhenbereichs variabel einstellbar ist. Damit können die Horizontalebene HE1 und HE2 zwei beabstandete und parallel zueinander verlaufende Ebenen beschreiben. Durch die Höhenverstellbarkeit der Radanordnung 7 kann vorteilhaft die Eingreiftiefe der Schneidwalze 3 in den Boden B wie auch der durch das Eigengewicht der Schneidwalze 3 wirkende Druck derselben auf den Boden B variiert werden.

Die Radanordnung 7 weist einen äußeren Rotationsdurchmesser d auf, der im Wesentlichen durch die Durchmesser der Räder 8 bestimmt wird. Der äußere Rotationsdurchmesser d, und zwar gemessen in der Horizontalen und in dieser Weise projiziert auf den Boden B, begrenzt in einer sich quer zur zweiten Drehachse DA2 erstreckenden Richtung einen Auflagebereich 11 der Radanordnung 7. Dieser Auflagebereich 11 kann somit als länglicher Bereich verstanden werden, der sich seiner Breite nach quer zur zweiten Drehachse DA2 und seiner Länge nach entlang der zweiten Drehachse DA2 erstreckt.

Die Schneidmesserelemente 4 der Schneidwalze 3 sind beispielsweise radial beabstandet zur ersten Drehachse DA1 angeordnet, und zwar derart, dass der Abstand der Schneidabschnitte 4' der Schneidmesserelemente 4 zur ersten Drehachse DA1 gleich oder annähernd gleich ist und die Schneidabschnitte 4' einen äußeren Rotationsdurchmesser der Schneidwalze 3 festlegen. Der äußere Rotationsdurchmesser d der Radanordnung 7 und der äußere Rotationsdurchmesser der Schneidwalze 3 sind vorteilhaft aufeinander abgestimmt, und zwar derart dass mittels der Radanordnung 7 eine Begrenzung der Eindringtiefe der Schneidwalze 3 bzw. der Schneidmesserelemente 4 der Schneidwalze 3 in den Boden B effektiv und optimal bewirkt werden kann. Vorzugsweise ist der äußere Rotationsdurchmesser d der Radanordnung 7 kleiner als der äußere Rotationsdurchmesser der Schneidwalze 3. Beispielsweise weist der äußere Rotationsdurchmesser d der Radanordnung 7 einen Wert auf, der in einem Bereich von 80% bis 95% des äußeren Rotationsdurchmessers der Schneidwalze 3 liegt. Der äußere Rotationsdurchmesser d der Radanordnung 7 beträgt beispielsweise 90% des äußeren Rotationsdurchmessers der Schneidwalze 3.

Die im Querschnitt sternförmigen Schneidmesseranordnungen S1 bis S7 sind vorzugsweise beabstandet zueinander entlang der Drehachse DA angeordnet, und zwar derart, dass zwischen den aufeinander folgender Schneidelementen 4 zweier benachbarten Schneidmesseranordnungen S1 bis S7 ein Freiraum 5 entsteht. Eine Schneidmesseranordnung S1 bis S7 weist jeweils mehrere, vorzugsweise 8 bis 24 Schneidmesserelemente 4 in einer Ebene E1 bis E7 auf. Jeder Freiraum 5 ist vorzugsweise in Arbeitsrichtung fluchtend zu einem Radabstand 9 zwischen zwei benachbarten Rädern 8 der Radanordnung 7 angeordnet.

Der Abstand der Schneidabschnitte 4' zu der Oberfläche des Walzenkörpers 3.1 beträgt vorzugsweise mindestens 150mm, beispielsweise zwischen 150mm und 300mm.

Wie aus Figur 4 ersichtlich, erstrecken sich bei der Ausführungsvariante gemäß Figuren 3 und 4 zinkenartige Flachstahlelemente 6 ausgehend vom Querträgerrahmenabschnitt 2.1 entgegen der Arbeitsrichtung AR schräg nach unten in jeweils einen Radabstand 9 zwischen zwei benachbarten Rädern 8 der Radanordnung 7. Mit ihren freiendseitigen Endabschnitten 6' definieren die zinkenartigen Flachstahlelemente 6 einen Eingriffsbereich 10 zum Eingreifen in den Boden B. Der Eingriffsbereich 10 überlappt dabei mit dem Auflagebereich 11 der Radanordnung 7 und ist in dem Beispiel der Figur 4 vollständig innerhalb des Auflagebereiches 11 angeordnet. Die freiendseitigen Endabschnitte 6' der zinkenartigen Flachstahlelemente 6 sind somit unterhalb der zweiten Drehachse DA2 und zwar näherungsweise im Bereich einer die zweite Drehachse DA2 aufnehmenden Vertikalebene angeordnet.

Durch die spezielle Hintereinanderschaltung der Radanordnung 7 und der Schneidwalze 3 werden im Arbeitseinsatz die zu zerschneidenden, insbesondere auch von der Erdoberfläche nach oben wegstehenden Grünpflanzen oder Pflanzenteile auf besonders vorteilhafte Weise umgeknickt, auf den Boden niedergedrückt und in gewissem Maße in Arbeitsrichtung AR orientiert, so dass die Schneidabschnitte 4' der Schneidmesserelemente 4 der Schneidwalze 3 vorteilhafterweise quer zur Längsrichtung der Pflanzen oder Pflanzenteile orientiert sind um dadurch eine effiziente Schneidwirkung zu erzielen. Die Pflanzenteile können damit leichter von der nachgeschalteten Schneidwalze 3 zerschnitten werden.

Mittels der Radanordnung 7 in Verbindung mit den zinkenartigen Flachstahlelementen 6 der Ausführungsvarianten gemäß Figuren 3 und 4 wird besonders vorteilhaft auch ein zusätzliches Schneiden von quer zur Arbeitsrichtung liegenden Pflanzenteilen ermöglicht. Beispielsweise wirkt die Radanordnung 7 vorteilhaft als Niederhalter und Festhalter der zu schneidenden Pflanzenteile, welche durch die zinkenartigen Flachstahlelemente 6 durchtrennt werden können. Dies wird insbesondere dadurch verbessert, dass der Eingriffsbereich 10 der zinkenartigen Flachstahlelemente 6 mit dem Auflagebereich 11 der Radanordnung 7 überlappt, da darüber die Pflanzenteile innerhalb des Überlappungsbereiches von der Radanordnung 7 gehalten und in dieser gehaltenen Stellung mit den zinkenartigen Flachstahlelementen 6 geschnitten werden können. Ein Kurzschneiden der Pflanzen auf eine Länge von maximal 15 cm ist damit effektiv möglich.

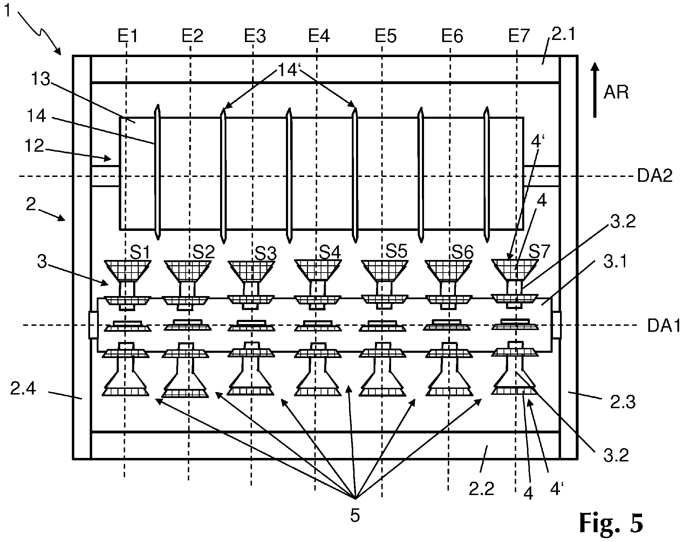

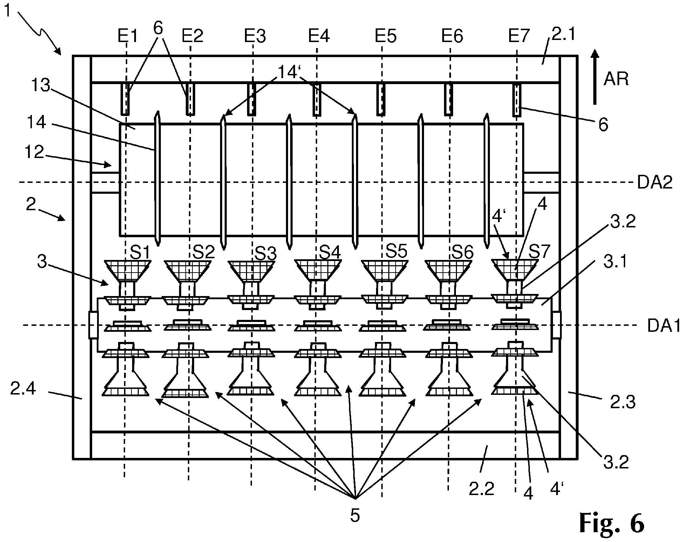

Figuren 5 und 6 zeigen beispielhaft jeweils eine schematische Draufsicht auf zwei weitere alternative Ausführungsvarianten der erfindungsgemäßen Bodenbearbeitungsvorrichtung 1.

Die Bodenbearbeitungsvorrichtung 1 gemäß Figuren 5 und 6 unterscheidet sich von den Ausführungsvarianten der Figuren 1 bis 4 dadurch, dass anstelle der Radanordnung 7 eine Trommelwalzenanordnung 12 vorgesehen ist, welche ebenfalls in Arbeitsrichtung AR der Schneidwalze 3 vorgeschaltet und drehbar um die senkrecht zur Arbeitsrichtung AR der Bodenbearbeitungsvorrichtung 1 verlaufende zweite Drehachse DA2 an dem Trägerrahmen 2 gelagert ist.

Die Trommelwalzenanordnung 12 der dargestellten Beispiele umfasst jeweils einen im Wesentlichen hohlzylinderartigen, rohrförmigen Trommelwalzenkörper 13, der sich über die gesamte Arbeitsbreite der Schneidwalze 3 erstreckt und der beispielsweise durch ein Stahlrohr gebildet ist, welches an seinen stirnseitigen Enden verschlossen ausgebildet sein kann. Alternativ können zwei oder mehrere Trommelwalzenkörper 13 entlang der zweiten Drehachse DA2 nebeneinander angeordnet sein und zwar unmittelbar aneinander anschließend oder in einem vorgegebenen Abstand zueinander. Die Trommelwalzenanordnung 12 umfasst eine Vielzahl von jeweils eine Schneide 14' aufweisenden Schneidkantenelementen 14, die an dem Trommelwalzenkörper 13 angeordnet, vorzugsweise angeformt oder befestigt, beispielsweise durch Schweißen mit dem Trommelwalzenkörper 13 verbunden sind. Die Schneidkantenelemente 14 sind beispielsweise in Form von Stegmessern ausgebildet und über die Arbeitsbreite der Schneidwalze 3 entlang der zweiten Drehachse DA2 beabstandet zueinander angeordnet, und zwar derart, dass die Schneidkantenelemente 14 gleichmäßig über die Arbeitsbreite der Schneidwalze 3 entlang der zweiten Drehachse DA2 verteilt sind.

In den dargestellten Beispielen sind die Schneidkantenelemente 14 umlaufend ausgebildet, derart, dass die Schneiden 14' der Schneidkantenelemente 14 eine Zylindermantelfläche des im Wesentlichen zylinderförmigen Trommelwalzenkörpers 13 umlaufen. Die Schneiden 14' sind daher so ausgerichtet, dass sie in einer parallel zur Arbeitsrichtung AR verlaufenden Schnittrichtung schneiden und können als Längsschneiden verstanden werden, die im Wesentlichen konzentrisch um die zweite Drehachse DA2 angeordnet sind und daher in einer senkrecht zur zweiten Drehachse DA2 verlaufenden Schnittrichtung schneiden.

Die Schneidkantenelemente 14 der Trommelwalzenanordnung 12 sind derart entlang der zweiten Drehachse DA2 verteilt angeordnet, dass jedes Schneidkantenelement 14 versetzt zu einer der Schneidmesseranordnungen S1 bis S7 der Schneidwalze 3 und damit in Arbeitsrichtung AR fluchtend zu jeweils einem Freiraum 5 zwischen den Schneidmesseranordnungen S1 bis S7 ausgerichtet ist.

In der Ausführungsvariante gemäß der Figur 6 sind unterschiedlich zu der Ausführungsvariante gemäß Figur 5 am Querträgerrahmenabschnitt 2.1 des Trägerrahmens 2 zinkenartige Flachstahlelemente 6 angeordnet, die sich entgegen der Arbeitsrichtung AR in Richtung der nachfolgenden Trommelwalzenanordnung 12 ausgehend vom Querträgerrahmenabschnitt 2.1 des Trägerrahmens 2 schräg nach unten erstrecken. Jedes zinkenartige Flachstahlelement 6 erstreckt sich dabei in jeweils einen Abstand zwischen zwei benachbarten Schneidkantenelementen 14.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Bezugszeichenliste

- 1: Bodenbearbeitungsgerät
- 2: Trägerrahmen
- 2.1: Querträgerrahmenabschnitt
- 2.2: Querträgerrahmenabschnitt
- 2.3: Längsträgerrahmenabschnitt
- 2.4: Längsträgerrahmenabschnitt
- 3: Schneidwalze
- 3.1: Walzenkörper
- 3.2: Halteelemente
- 4: Schneidmesserelement
- 4': Schneidabschnitt
- 4": Verbindungsabschnitt
- 5: Freiraum
- 6: zinkenartige Flachstahlelemente
- 6': freiendseitige Endabschnitte
- 7: Radanordnung
- 8: Räder
- 9: Radabstand
- 10: Eingriffsbereich
- 11: Auflagebereich
- 12: Trommelwalzenanordnung
- 13: Trommelwalzenkörper
- 14: Schneidkantenelemente
- 14': Schneiden

- AR: Arbeitsrichtung
- B: Boden
- d: äußerer Rotationsdurchmesser der Radanordnung
- DA1, DA2: erste und zweite Drehachse
- E1 - E7: erste bis siebte Ebene
- S1 - S7: Schneidelementanordnungen
- HE1, HE2: Horizontalebene

## Patentansprüche

1. Bodenbearbeitungsvorrichtung (1) zum Zerkleinern von Ernterückständen oder der bestehenden Begrünung einer landwirtschaftlichen Nutzfläche umfassend zumindest einen Trägerrahmen (2) und zumindest eine drehbar um eine senkrecht zur Arbeitsrichtung (AR) der Bodenbearbeitungsvorrichtung (1) verlaufende erste Drehachse (DA1) an dem Trägerrahmen (2) gelagerte Schneidwalze (3), bei der die Schneidwalze (3) eine Vielzahl von einen Schneidabschnitt (4') umfassende Schneidmesserelemente (4) aufweist, wobei die Schneidmesserelemente (4) in mehreren senkrecht zur ersten Drehachse (DA1) verlaufenden und entlang der ersten Drehachse (DA1) annähernd gleichmäßig verteilten Ebenen (E1 bis E7) angeordnet sind und wobei die Schneidabschnitte (4') der Schneidmesserelemente (4) parallel zur ersten Drehachse (DA1) orientiert sind, **dadurch gekennzeichnet, dass** eine drehbar um eine senkrecht zur Arbeitsrichtung (AR) der Bodenbearbeitungsvorrichtung (1) verlaufende zweite Drehachse (DA2) an dem Trägerrahmen (2) gelagerte Radanordnung (7) oder Trommelwalzenanordnung (12) vorgesehen ist, die in Arbeitsrichtung (AR) der Schneidwalze (3) vorgeschaltet ist.

2. Bodenbearbeitungsvorrichtung nach Anspruch 1, **dadurch gekennzeichnet, dass** die erste und zweite Drehachse (DA1, DA2) parallel zueinander verlaufen und jeweils in einer vom Boden (B) beabstandeten Horizontalebene (HE1, HE2) aufgenommen sind und dass die Radanordnung (7) oder Trommelwalzenanordnung (12) höheneinstellbar ausgebildet ist, wobei der Abstand der die zweite Drehachse (DA2) aufnehmenden Horizontalebene (HE2) vom Boden (B) innerhalb eines vorgegebenen Höhenbereichs variabel einstellbar ist.

3. Bodenbearbeitungsvorrichtung nach Anspruch 1 oder 2, **dadurch gekennzeichnet, dass** die Radanordnung (7) eine Vielzahl von Rädern (8) aufweist, wobei die Räder (8) beabstandet zueinander über eine Arbeitsbreite der Schneidwalze (3) entlang der zweiten Drehachse (DA2) angeordnet sind, und zwar derart, dass zwischen jeweils zwei benachbarten Rädern (8) ein Radabstand (9) entsteht.

4. Bodenbearbeitungsvorrichtung nach Anspruch 3, **dadurch gekennzeichnet, dass** die Räder (8) jeweils einzeln oder auf einer gemeinsamen Radachse gelagert sind und/oder dass eine Lauffläche der Räder (8) flach oder gerundet ausgebildet ist und/oder eine Profilierung aufweist.

5. Bodenbearbeitungsvorrichtung nach einem der vorhergehenden Ansprüche, **dadurch gekennzeichnet, dass** die Radanordnung (7) einen äußeren Rotationsdurchmesser (d) aufweist, wobei der äußere Rotationsdurchmesser (d) in einer vertikalen Projektion auf den Boden (B) einen Auflagebereich (11) der Radanordnung (7) in einer sich quer zur zweiten Drehachse (DA2) erstreckenden Richtung begrenzt.

6. Bodenbearbeitungsvorrichtung nach Anspruch 1 oder 2, **dadurch gekennzeichnet, dass** die Trommelwalzenanordnung (12) wenigstens einen rohrförmigen Trommelwalzenkörper (13) aufweist.

7. Bodenbearbeitungsvorrichtung nach Anspruch 6, **dadurch gekennzeichnet, dass** der zumindest eine Trommelwalzenkörper (13) Schneidkantenelemente (14) mit jeweils einer Schneide (14') umfasst, wobei die Schneidkantenelemente (14) zum Schneiden in einer parallel zur Arbeitsrichtung (AR) verlaufenden Schnittrichtung ausgelegt sind und vorzugsweise in Form von umlaufenden Stegmessern ausgebildet sind.

8. Bodenbearbeitungsvorrichtung nach einem der vorhergehenden Ansprüche, **dadurch gekennzeichnet, dass** der Trägerrahmen (2) zumindest einen sich parallel zu den Drehachsen (DA1, DA2) über die Arbeitsbreite der Schneidwalze (3) erstreckenden Querträgerrahmenabschnitt (2.1) aufweist, der unterhalb der die erste Drehachse (DA1) aufnehmenden Horizontalebene (HE1) angeordnet ist und in Arbeitsrichtung (AR) der Radanordnung (7) oder der Trommelwalzenanordnung (12) vorgeschaltet ist.

9. Bodenbearbeitungsvorrichtung nach Anspruch 8, **dadurch gekennzeichnet, dass** am Querträgerrahmenabschnitt (2.1) des Trägerrahmens (2) zinkenartige Flachstahlelemente (6) in vorgegebenem Abstand zueinander angeordnet sind, wobei sich die zinkenartigen Flachstahlelemente (6) ausgehend vom Querträgerrahmenabschnitt (2.1) entgegen der Arbeitsrichtung (AR) in Richtung der nachfolgenden Radanordnung (7) oder Trommelwalzenanordnung (12) schräg nach unten erstrecken und mit ihren freiendseitigen Endabschnitten (6') einen sich quer zur Arbeitsrichtung (AR) erstreckenden Eingriffsbereich (10) zum Eingreifen in den Boden definieren.

10. Bodenbearbeitungsvorrichtung nach Anspruch 9, **dadurch gekennzeichnet, dass** der Eingriffsbereich (10) der zinkenartigen Flachstahlelemente (6) mit dem Auflagebereich (11) der Radanordnung (7) überlappt, wobei sich die zinkenartigen Flachstahlelemente (6) mit ihren freiendseitigen Endabschnitten (6') in den Radabstand (9) zwischen zwei benachbarten Rädern (8) erstrecken und/oder in den äußeren Rotationsdurchmesser (d) der Radanordnung (7) eingreifen.

11. Bodenbearbeitungsvorrichtung nach einem der vorhergehenden Ansprüche, **dadurch gekennzeichnet, dass** die Schneidmesserelemente (4) der Schneidwalze (3) radial beabstandet zur ersten Drehachse (DA1) angeordnet sind, und zwar derart, dass der Abstand der Schneidabschnitte (4') der Schneidmesserelemente (4) zur ersten Drehachse (DA1) gleich oder annähernd gleich ist und die Schneidabschnitte (4') einen äußeren Rotationsdurchmesser der Schneidwalze (3) festlegen, wobei die in einer Ebene (E1 bis E7) angeordneten Schneidmesserelemente (4) vorzugsweise gleichmäßig um die erste Drehachse (DA1) verteilt angeordnet sind, und zwar derart, dass zwei benachbarte Schneidmesserelemente (4) näherungsweise denselben Abstand zueinander aufweisen.

12. Bodenbearbeitungsvorrichtung nach einem der vorhergehenden Ansprüche, **dadurch gekennzeichnet, dass** die Schneidwalze (3) einen Walzenkörper (3.1) mit mehreren speichenartig davon nach außen abstehenden Halteelementen (3.2) aufweist, wobei jeweils ein Halteelement (3.2) zur freiendseitigen Aufnahme zumindest eines Schneidmesserelementes (4) ausgebildet ist und wobei die Schneidmesserelemente (4) beabstandet zum Walzenkörper (3.1) am freiendseitigen Ende eines Halteelementes (3.2) angeordnet sind.

13. Bodenbearbeitungsvorrichtung nach Anspruch 12, **dadurch gekennzeichnet, dass** der Walzenkörper (3.1) durch ein Nabenrohr (3.1) gebildet ist und/oder dass ein Schneidmesserelement (4) jeweils lösbar mit dem Halteelement (3.2) verbunden ist, vorzugsweise mittels einer kraft- und/oder formschlüssigen Verbindung.

14. Bodenbearbeitungsvorrichtung nach einem der vorhergehenden Ansprüche, **dadurch gekennzeichnet, dass** die in einer Ebene (E1 bis E7) angeordneten Schneidmesserelemente (4) eine im Querschnitt sternförmige Schneidmesseranordnung (S1 - S7) bilden, wobei die Schneidmesserelemente (4) zumindest zweier entlang der ersten Drehachse (DA1) aufeinander folgender Schneidmesseranordnungen (S1 - S7) auf Lücke zueinander angeordnet sind und/oder deren Schneidabschnitte (4') entlang der ersten Drehachse (DA1) zumindest abschnittsweise überlappen.

15. Bodenbearbeitungsvorrichtung nach Anspruch 14, **dadurch gekennzeichnet, dass** die im Querschnitt sternförmigen Schneidmesseranordnungen (S1 - S7) beabstandet zueinander entlang der ersten Drehachse (DA1) angeordnet sind, und zwar derart, dass zwischen den aufeinander folgenden Schneidelementen (4) zweier benachbarten Schneidmesseranordnungen (S1 - S7) ein Freiraum (5) entsteht, wobei vorzugsweise die Anzahl an Freiräumen (5) zwischen benachbarten Schneidmesseranordnungen (S1 - S7) der Schneidwalze (3) gleich der Anzahl an Radabständen (9) zwischen benachbarten Rädern (8) der Radanordnung (7) ist und jeder Freiraum (5) in Arbeitsrichtung (AR) fluchtend zu einem Radabstand (9) angeordnet ist.
